# EUROPEAN PATENT SPECIFICATION

(11) **EP 3 647 766 B1**
(45) Date of publication and mention of the grant of the patent: **02.03.2022**
(21) Application number: 19202268.9
(22) Date of filing: 09.10.2019
(51) Int. Cl.: G01N 21/85, G01N 21/90, G01N 21/53, G01N 15/02, G01N 21/25

(54) **METHOD AND DEVICE FOR OPTICAL INSPECTION OF A WASTE LIQUID**
VERFAHREN UND VORRICHTUNG ZUR OPTISCHEN INSPEKTION EINER ABFALLFLÜSSIGKEIT
PROCÉDÉ ET DISPOSITIF D'INSPECTION OPTIQUE D'UN DÉCHET LIQUIDE

(30) Priority: 29.10.2018 TW 107138168
(43) Date of publication of application: 06.05.2020
(60) Divisional application: 21216830.6
(73) Proprietor: Lin, Hsiu-An, Kaohsiung City 824, Taiwan (TW)
(72) Inventor: Lin, Hsiu-An, Kaohsiung City 824, Taiwan (TW)
(74) Representative: 2K Patentanwälte Blasberg Kewitz & Reichel

(56) References cited:
- JP-A- 2005 270 689
- JP-A- 2017 049 030
- JP-A- 2017 207 323
- US-A- 5 480 562
- US-A- 6 049 381
- US-A1- 2010 097 605
- US-A1- 2011 140 865
- US-A1- 2012 327 404
- US-A1- 2013 107 261

## Description

### BACKGROUND OF INVENTION

### 1. FIELD OF THE INVENTION

The present invention relates to a method and a device for optical inspection of a waste liquid including a water content. The inspection of the quality of the waste liquid and calculation of the price of the waste liquid are performed instantaneously.

### 2. DESCRIPTION OF THE PRIOR ART

Waste oil, originated from the mineral oil, animal oil or plant oil, could be converted into fuel that could be used by engine, burner or boiler, or be converted into recycled raw material through a chemical transformation process. The waste oil could be regarded as a typical green energy that could vitally contribute on the economical development, energy saving and carbon reduction and also contribute on environmental protection and suppression of air pollution.

However, in recent years, the waste oils are illegally obtained by unscrupulous party and are converted into edible oil selling for profiteering on the market. In addition, regarding the industrial waste oils such as waste lubricant oil or waste solvent, they are illegally discarded to pollute the hillside, river, soil or even the ocean. The illegal disposal of the industrial waste oils also generates great impact on the environment and becomes problem about which the governments or environmental authorities are concerned. Conventionally, where the oil comes from and where the waste oil goes to is hardly to be controlled and managed by the authorities concerned, and it is also difficult to prevent the waste oil from entering illegal factory or being discarded illegally. Accordingly, whether the government or the privately owned company, there has a need to provide a system and method for simply, efficiently and effectively managing the footprint of waste oil including the source where it comes from and destination where it goes to so that the food safety of nationals could be effectively controlled.

In the procedure for recycling the waste oil, another important issue is how to conveniently recycle waste oil and effectively grasp the quality of waste oil instantaneously so as to calculate the price of the waste oil to be recycled. The factors for defining the quality of the waste oil include water content, acid value, iodine value, and residue of the waste oil. These factors are important for determining the recycling price of the waste oil. Conventionally, taking water content for example, the procedure for examining the quality of waste oil includes steps of sampling the waste oil to be recycled, measuring the weight of the sampled waste oil, heating the sampled waste oil to remove the water, measuring the weight of heated waste oil, and finally, determining the rate of water content according to the measurement before and after heating the waste oil. It is clear that the previously-described procedures are time-consuming, and it usually takes at least 5 to 10 minutes. Since the quality of waste oil could not be obtained instantaneously so that the recycling company could not promptly identify and fairly calculate the price and value of the waste oil.

Accordingly, there has need for providing a device and method for recycling the waste and instantaneously inspecting quality and calculating value of the waste so as to solve the insufficient part of the prior art.

US 2013/107261 A1 discloses a device for inspecting waste quality, comprising: a transparent part; a draining device for draining the waste liquid and forcing the waste liquid passing through the transparent part; an illumination device for illuminating the transparent part; an image acquiring device, configured to detect the light from the transparent part and generate an image signal with respect to the transparent part; and a signal processing module, electrically coupled to the image acquiring device, for receiving the image signal and determining a quality of the waste liquid according to the image signal.

US 2013/107261 A1 discloses that a fluid to be monitored passes through a fluid chamber. A source emits an optical beam through the fluid chamber. An imaging system uses the optical beam coming from the fluid within the fluid chamber. An imaging system comprises an optical detector which converts the image formed on the optically sensitive surface into electronic data, which are transferred to a shape classifier which analyzes the output data of detector and identifies the size and shape of a particle. A means is provided for storing in computer memory a reference shape indicative of a particulate shape having a circular cross-section whereby the electronic means for comparing said reference shape to said optical image is effective to identify particulates whose shape matches said reference shape.

US 2011/140865 A1 discloses a management system and method for waste oil.

### SUMMARY OF THE INVENTION

It is an object of the present invention to provide an effective and economic method and device for recycling waste liquid.

This problem is solved by a method as claimed by claim 1 and by a device as claimed by claim 4. . Further advantageous embodiments are the subject-matter of the dependent claims.

### BRIEF DESCRIPTION OF THE DRAWINGS

The present invention will now be specified with reference to its preferred embodiment illustrated in the drawings, in which:
Fig. 1A illustrates a device for inspecting quality of waste according to one embodiment of the present invention;
Fig. IB illustrates a device for inspective quality of waste according to another embodiment of the present invention;
Fig. 2 illustrates a device for inspection of waste according to one embodiment of the present invention;
Figs. 3-5 respectively illustrate device for inspection of waste according to different kinds embodiment of the present invention; and
Fig. 6 illustrates a method for inspection of the waste according to one embodiment of the present invention.

### DESCRIPTION OF THE PREFERRED EMBODIMENT

The invention disclosed herein is directed to a device and method for inspection of waste and instantaneously inspecting quality and calculating price of the waste. In the following description, numerous details are set forth in order to provide a thorough understanding of the present invention. It will be appreciated by one skilled in the art that variations of these specific details are possible while still achieving the results of the present invention. In other instance, well-known components are not described in detail in order not to unnecessarily obscure the present invention.

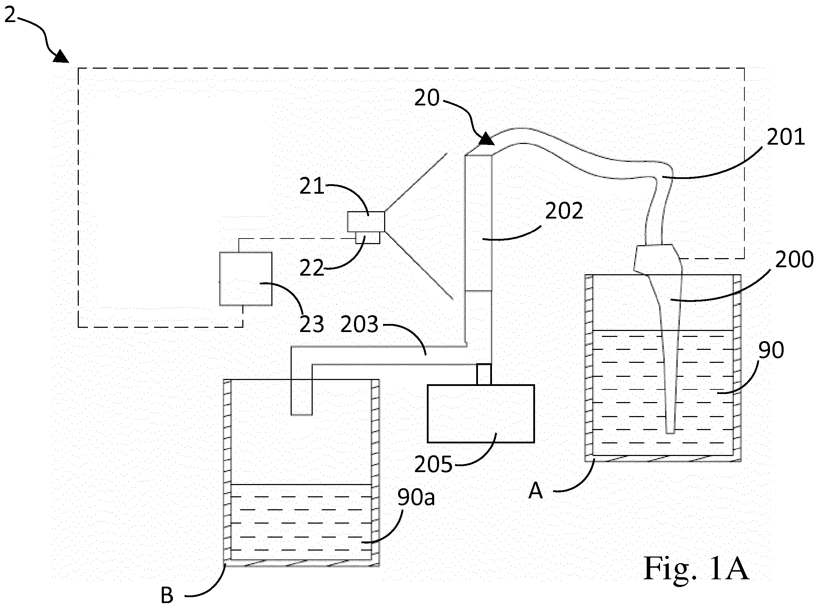

Please refer to Fig. 1A which illustrates a device for instantaneously inspecting quality of the waste according to one embodiment of the present invention. The waste could be, but should not be limited to, liquid or solid wastes. In the present embodiment, the waste is waste liquid. The device 2 comprises a draining device 20, an illuminating device 21, an image acquiring device 22, and a signal processing module 23. The draining device 20 is utilized to drain a waste liquid 90, which could be a valuable waste. In one embodiment, the waste liquid could be waste oil, such as waste mechanical oil, waste lubricant oil, a waste edible oil, or waste solvent. In the present embodiment, the waste liquid 90 is waste edible oil. The waste liquid 90 is accommodated in a container A. The container A could be arranged in a waste recycling machine. Alternatively, the container A could also be, but should not be limited to, a waste oil drum utilized by the caterer, or a household bucket.

The draining device 20 has a draining nozzle 200, and draining pipeline 201, and a transparent part, which is a transparent tube segment in the present embodiment. The draining nozzle 200 is inserted into the interior of the container A for draining the waste liquid 90 inside the container A. The draining pipeline 201 is utilized to guide the waste liquid 90 drained by the draining nozzle 200. The transparent tube segment 202 is coupled to the draining pipeline 201 so that the waste liquid 90 in the draining pipeline 201 could passes through the transparent tube segment 202. In addition, another pipeline 203 is coupled to the transparent tube segment 202 for guiding the waste liquid 90a passing through the transparent tube segment 202 into a storage container B, in which the waste liquid 90a accommodated is qualified to be recycled. It is noted that the draining device 20 is well known art to draining the liquid. In one embodiment, the draining device 20 is operated through a negative pressure generating device 205 through which the negative pressure is transmitted into the draining nozzle 200 by the draining pipeline 201 so that the draining nozzle 200 could drain the waste liquid 90 from the container A. It is noted that although the transparent tube segment 202 is a whole transparent tube segment in the present embodiment, it will not limited thereto. There still has another embodiment for implementing the transparent tube segment. For example, the cross section of transparent tube segment will not be limited to the circular shape, other shape such as rectangle shape or polygon shape could also be available. In addition, the transparent tube segment 202 could also be a transparent cover formed on the draining pipeline 201. Alternatively, the pipeline 201 could also be a transparent pipeline, and the transparent tube segment is a part of the transparent pipeline.

The illumination device 21 is utilized to project lights onto the transparent tube segment. The light source of the illumination device 21 has no specific limitation, which could be a broadband light, such as white light, for example, or narrow band light, such as laser, for example. Alternatively, the light source could also be an infrared light source. The user could select proper type of light source as the illumination device according to the user's need.

The image acquiring device 22 detects lights from the transparent tube segment 202 during the draining device 20 draining the waste liquid 90, and generates at least one image signals with respect to the illuminated transparent tube segment 202. It is noted that the lights from the transparent tube segment 202 could be lights penetrating through the transparent tube segment 202 having the waste liquid or lights reflecting from the waste liquid inside the transparent tube segment 202. Since the material of the transparent tube segment 202 is a transparent material, such as glass or plastic material, for example, when the lights projected onto the transparent tube segment 202 having the waste liquid 90 flowing therethrough, a transparency with respect to the waste liquid will be varied according to the composition or quality of the waste liquid 90.

Taking the waste edible oil as an example, the water content of the waste oil will affect the transparency; therefore, when the water content is varied, the level of the transparency will be varied as well. By using the phenomenon, it is capable of instantaneously inspecting the waste edible oil through the images acquired by the image acquiring device 22 thereby determining the quality of the waste edible oil within very short of time, such as few seconds or even shorter, depending on the speed of image processing. Accordingly, under the condition that the illumination device 21 projects the lights onto the transparent tube segment 202, the transparency characteristic of the images generated by the image acquiring device 22 could be analyzed so as to determine the quality of the waste liquid. It is noted the characteristic for determining the waste liquid is not limited to the transparency. For example, the shape, the appearance, the spectrum, and the color that could be quantitated can be alternatives for determining quality of the waste liquid.

It is also noted that, the images could be a video formed by a series of images, a single image obtained at a specific time point, or multiple images obtained at a specific image acquiring frequency, such as 2 seconds taking one image, for example. In addition, the image acquiring device 22 and the illumination device 21 are arranged at the same side of the transparent tube segment 202.

The signal processing module 23 is electrically coupled to the image acquiring device 22 for receiving the images and determining the quality of the waste liquid. In the present embodiment, the signal processing module 23 converts at least one images into quantitative values and determines the quality of the waste liquid according to the quantitative values, wherein the quantitative values are corresponding to at least one of the shape, appearance, color, and transparency. In one embodiment, if the images is video, after the signal processing module 23 receives the images, the signal processing module 23 will samples at least one frames from the images according to the predetermined sampling frequency or sampling rate.

In one embodiment, taking water content of waste edible oil for example, the transparency of the waste edible oil will be varied according to the water content in the waste edible oil. Accordingly, the brightness and contrast characteristics of each pixel in the acquired images of the waste edible oil having different transparency will also be varied. The signal processing module 23 could obtain the quantitative values according to the brightness and contrast of the images thereby comparing the obtained quantitative values with a predetermined standard value and determining the quality of the waste edible oil according the comparing result. In one embodiment, the signal processing module 23 converts each image into grey scale image and obtains the brightness value, contrast value or the combination thereof. In another embodiment, the signal processing module 23 has capability of artificial intelligence for adjusting the predetermined standard values according to the big data of quantitative values with respect to the characteristic of shape, appearance, spectrum, color, transparency, or combination of at least two previously described characteristics.

In one embodiment, the signal processing module 23 could be integrated circuit module having signal processing capability, such as CPU, MCU or other elements having processing capability. Alternatively, the signal processing module 23 could also be a device such as notebook, workstation, computer, server or PAD computer.

In one embodiment, the user could previously set the standard value associated with the acceptable quality in the signal processing module 23. Taking the water content for example, when the signal processing module 23 determines the transparency of the waste edible oil under the standard value of waste edible oil according to the acquired images, a warning message would be emitted immediately and the draining device 20 is stopped to drain the waste liquid immediately.

In one embodiment, the quality of waste liquid could be determined according to each frame of the captured video acquired by the image acquiring device 22. Alternatively, a sampling rate is configured and a single image is acquired according to the configured sampling rate. The obtained sampling image is then judged by the signal processing module 23 to determine the quality of the waste liquid. Whether the continuous frames or periodically acquired images are utilized to judge the quality of waste liquid, the quality of the waste liquid to be recycled. could be quickly judged and the draining operation could be stopped immediately once quality of the waste liquid is under the standard, whereby the dispute between the recycling company and user or waste liquid provider could be eliminated and the time cost of recycling waste liquid could be saved.

It is noted that although the determination about the quality of waste liquid is explained by taking water content inside the waste liquid as an example, other parameters such as iodine value, or acid value could also be converted into a relationship with the transparency, shape, appearance, spectrum, color so that a database associated different parameters could be established for determining the quality of the waste liquid. Taking waste edible oil as an example, the recycling company could establish database about quality levels, such as excellent, medium, or poor level according to transparency, spectrum, or color to determine the water content, iodine value, acid value of the waste liquid thereby determining the quality of the waste liquid. It is noted that the level stages for determining the quality of waste liquid are not limited to the above three exemplary stages, and the user could define the number of quality levels according to the needs.

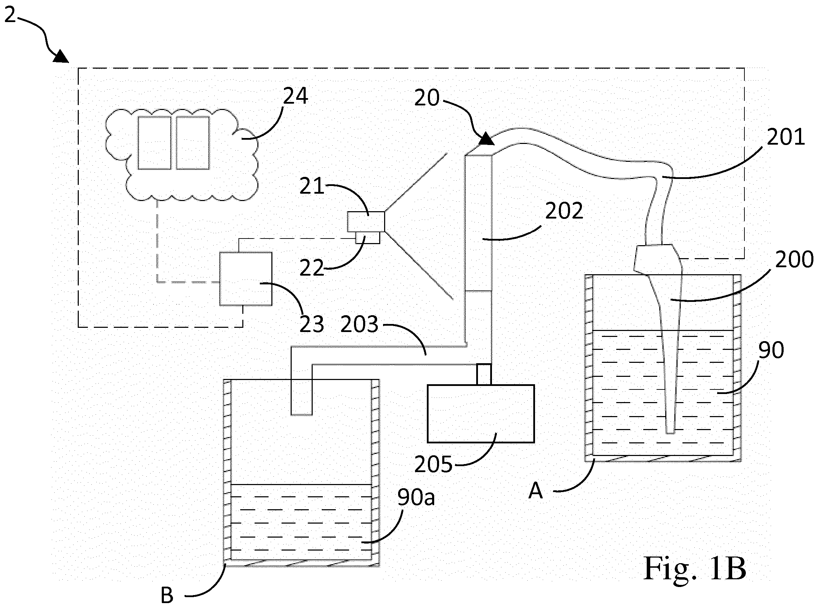

In another embodiment, please refer to Fig. 1B, the signal processing module 23 is electrically coupled to an image database having a plurality of image samples associated with the quality of the waste liquid. In one embodiment, taking the water content of waste edible oil for example, the user could establish different image samples respectively corresponding to different water content levels in the waste edible oil. In one embodiment, the user could provide a plurality of containers respectively having waste edible oil with different known water contents. Then, the waste edible oil in each container is drained into the transparent tube segment through the pipeline, and the image acquiring device taking the images with respect to waste edible oil having different known water contents drained from different container. The images are taken as the image samples and are stored in the database 24. In one embodiment, the database could be arranged in a remote server that could be connected by the signal processing module 23 through wire connection or wireless connection. Alternatively, the database 24 could be a local database directly arranged in the same computer in which the signal processing module 23 is also integrated, or arranged in a separated computer electrically coupled to the signal processing module 23 through network. In one embodiment, if the image signal is referred to video signal, when the signal processing module 23 receives the image signal, each frame within the image signal representing different time point is separated and is compared with the image samples pre-stored in the database. The comparing method to determine if the two images are the same/similar or not is well known in the art. For example, the contrast or brightness in the region of interest of the acquired image and image sample are compared with each other for determining the acquired image is the same as or similar to the image sample or not.

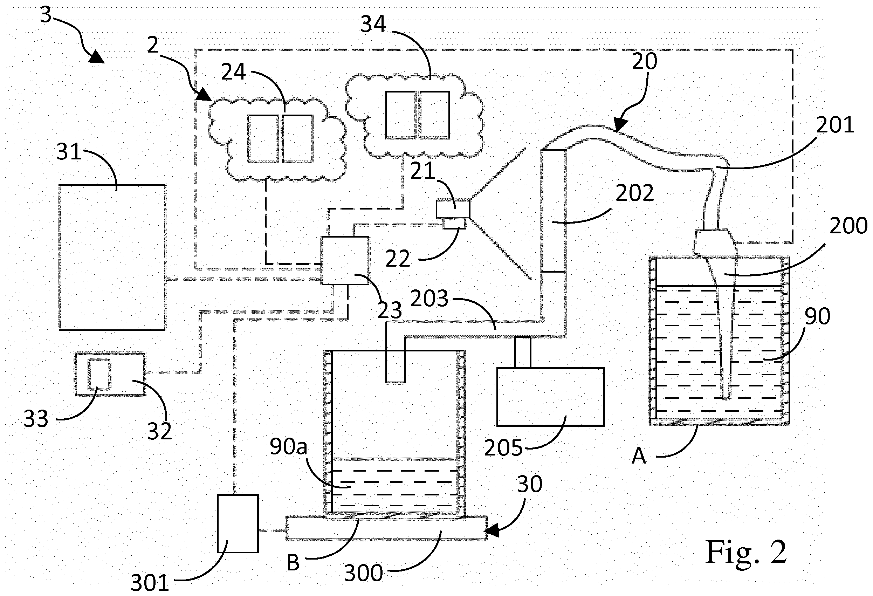

Please refer to the Fig. 2, which illustrates a device for inspection of waste to be recycled according one embodiment of the present invention. The device could combine the instantaneously inspecting device shown as Figs. 1A or 1B. In the present embodiment, the architecture shown in Fig. IB is utilized for inspecting the quality of the waste liquid. In the embodiment shown in Fig. 2, the device for recycling waste liquid comprises the device 2 for instantaneously inspecting quality of the waste liquid, container B, and a price determining module 30. The container B is communicated with the draining device 20. In the present embodiment, the waste liquid 90a after passing the quality inspection will be guided into the container B. The price determining module 30, in the present embodiment, comprises a weight measuring unit 300 and a calculating unit 301 electrically coupled to the weight measuring unit 300. In one embodiment, the weight measuring unit 300 and the calculating unit 301 could be a separated unit, respectively. Alternatively, the weight measuring unit 300 and the calculating unit 301 could be integrated as a single module. In another embodiment, the calculating unit 301 could be integrated with the signal processing module 23. It is noted that the calculating unit 301 could be a hardware device formed by electrical circuit, or alternatively, it could be implemented by the software, or a combination of hardware and software. After the waste edible oil is drained and inspected, the price determining module 30 will measure the weight of waste liquid 90a in the container B, and calculate the total price of the waste liquid.

In the present embodiment, the device for recycling the waste liquid further comprises a display 31 and a price storage unit 32. The display 31 is utilized to display inspected information of the waste liquid to be recycled and to display transaction information when the price of the waste liquid to be recycled is determined. In one embodiment, the images acquired by the image acquiring device 22 could also be shown on the display 31. Moreover, the information associated with the price of the waste, such as weight or price calculated by the price determining module 30 could also be shown on the display 31. In alternative embodiment, if the inspected quality is under the standard level, or any abnormal information is occurred, the information could also be shown on the display 31.

The price storage unit 32, in one embodiment, is a card reader for accessing chip card 33 having capability of electronic currency or digital currency for electronic transaction. The chip card could be, but should not be limited to EasyCard^{®} issued in Taiwan, or Suica^{®} card and PASMO^{®} card issued in Japan. In the embodiment of card reader, the price calculated by the price determining module 30 is converted into electronic money that could be electronically stored into the chip card 33 by the price storage unit 32. The stored money amount is also shown on the display 31.

In another embodiment, the price storage unit 32 could store the converted money into the account tied with the smart phone of the user through a third party payment mechanism. In the present embodiment, the element 33 represents the smart device, such as smart phone, or PAD computer, for example. The third party payment mechanism could be, but should not limited to, line^{®} payment, PayPal^{®} payment, WeChat^{®}, or AliPay^{®}, and etc. In one embodiment, an App, such as Line, WeChat, installed in the smart device is tied with an electronic account of the user so that the price storage unit 32 could store the converted money or currency into the corresponding account through the smart device and APP according to the third party payment policy. Alternatively, the price storage unit 32 could convert the price into credit points that could accumulated by the user. The credit points could be stored into a virtual account provided by the recycle company. The credit points could be accumulated and be utilized to discount the price when the users buy products in the stores or shops having business collaboration with the recycle company.

In another embodiment, the price storage unit 32 could be a card reader of bank card or debit card so that the user could insert the bank card or debit card corresponding to a specific bank account into the price storage unit 32 whereby the bank card/debit card could connect to the remote database of the bank and start a cloud electronic transaction with the bank. In the present embodiment, the price determining module 30 evaluates the price of the waste liquid in the form money or currency and deposit the money into the bank account associated with the inserted bank card through the price storage unit 32. The stored money could also be shown on the display.

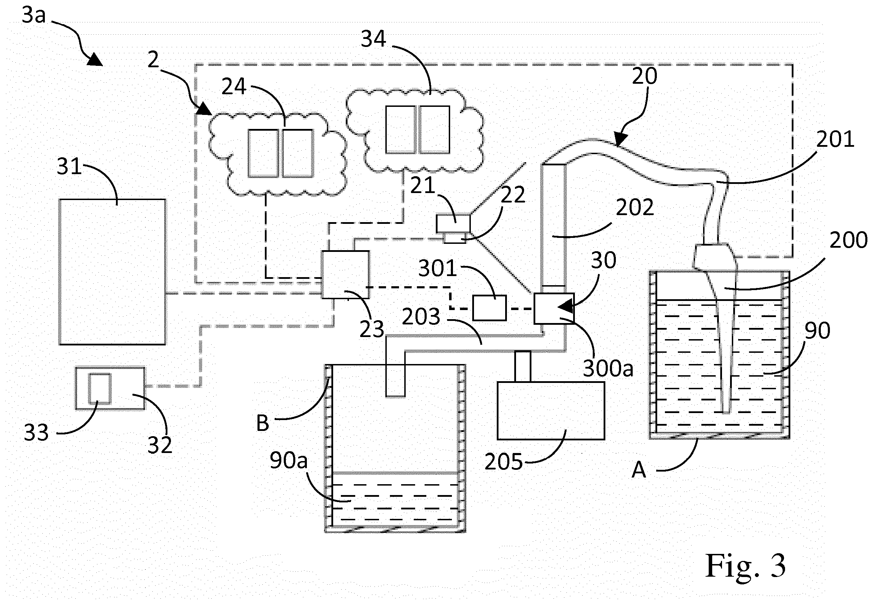

Please refer Fig. 3, which illustrates device for inspection of waste according to another embodiment of the present invention. In the present embodiment, basically, it is similar with the embodiment shown in Fig. 2. The different part is the price determining module 30 of the device 2 for recycling the waste is not a weight measuring unit but a flow rate measuring unit 300a, instead. In the present embodiment, the calculating unit 301 and flow rate measuring unit 300a are the separated devices. In another embodiment, the calculating unit 301 and flow rate measuring unit 300a are integrated as a single unit. It is noted that the calculating unit 301 could a hardware device or a software program or the combination of hardware and software. When the waste liquid is drained, the price determining module 30 will measure the volume of the waste liquid 90a flowing into the container B according to the flow rate passing through the transparent tube segment 202 measured by flow rate measuring unit 300a and time. Once the price of unit volume is known, the price determining module 30 can calculate the total price of the waste liquid 90a in the container B.

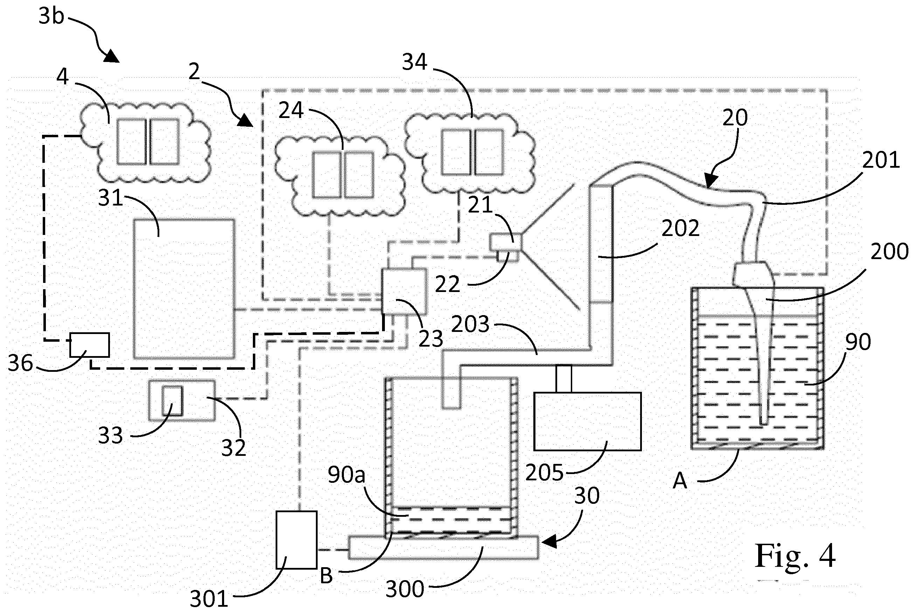

Please refer to Fig. 4, which illustrates another embodiment of the device for recycling the waste. In the present embodiment, basically, it is similar to the embodiment shown in Fig. 2. The different part is that a transaction module 36 electrically coupled to a cloud transaction platform 4 is arranged in the device 2 for making an exchanging transaction. The transaction module 36 provides a commodity list having commodities shown on the display 31 so that the user could know that what kinds of commodities could be traded when the price of the waste liquid is determined. In one embodiment, when the price of the waste liquid is determined, without choosing to store the price into chip card or store into the bank account, the user could pick at least one commodity through the display, e.g. touch display. Once the commodities are determined, the user could choose to make an exchanging transaction according to the determined price. After the exchanging transaction, if there still has remained price, it could be converted into electronic currency and stored into the chip card or converted into money stored into bank account through the bank card. On the contrary, if the determined price is insufficient to exchange the commodities that are selected by the user, the insufficient money could be deducted through electronic currency stored in the chip card or through bank card. In addition, it is also noted that the transaction module 36 could be an independent device combined with hardware and software, a software program or a device integrated into the signal processing module 23.

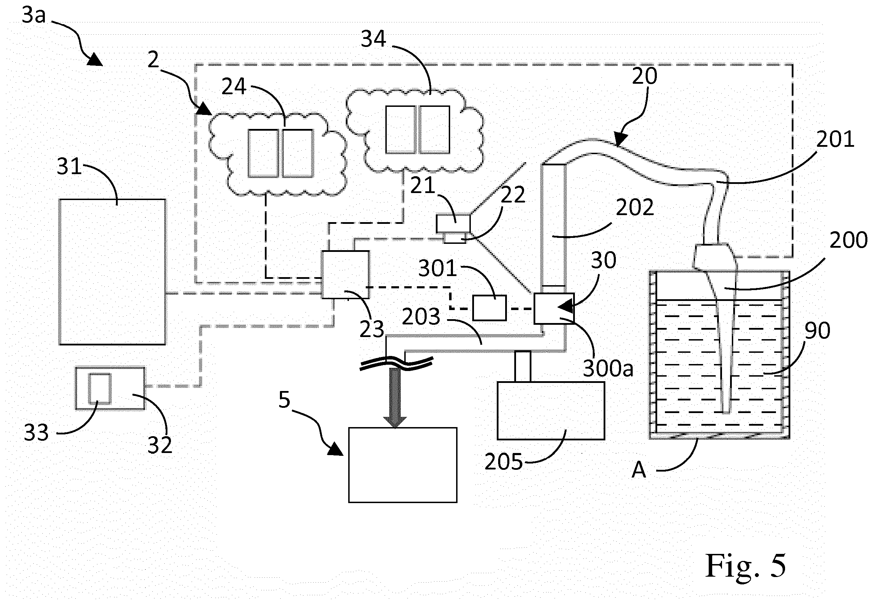

Please refer to Fig. 5, which illustrates another embodiment of device for recycling the waste. In the present embodiment, basically, it is similar to the embodiment shown in Fig. 3, the different part is that the qualified waste liquid is not stored in the container B in or near the device 2 but is guided into a tank 5 arranged at the remote location, such as recycling factory, through a guiding conduit 203. Regarding the price of the qualified waste liquid could be implemented by the flow rate measuring unit and the calculating unit.

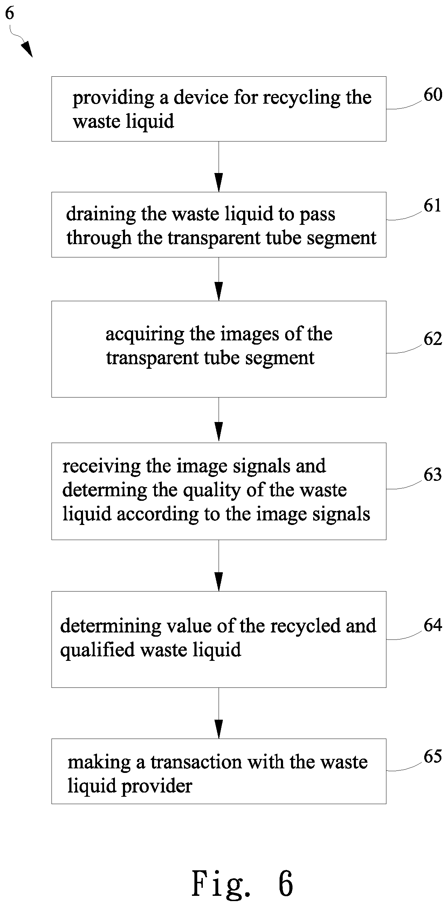

Please refer to Fig. 6, which illustrates a method for recycling the waste. At first, a step 60 is performed to provide a device for recycling the waste liquid. The device could be any one of the device shown in Figs. 2~ 5. In the present embodiment, the device shown in Fig. 2 is utilized. Next, a step 61 is performed to operate the draining device 20 to drain the waste liquid so that the waste liquid 90 could pass through the transparent tube segment 202. During the waste liquid passing through the transparent tube segment 202, the light emitted from the illumination device is projected onto the transparent tube segment 202.

After that, step 62 is performed to acquire the images of the transparent tube segment 202 by the image acquiring device 22 thereby generating image signals. In the present embodiment, the images are continuous frames forming a video. Next, step 63 is performed to receive the image signals by the signal processing module 23 by which a quality of the waste liquid passing through the transparent tube segment 202 could be determined. In the step 63, since the image signals are continuously acquired by the image acquiring device 22, the signal processing module 23 could instantaneously inspect the quality of the waste liquid according to the quantitative data with respect to shape, appearance, spectrum, color or transparency analyzed and obtained from the image signals or according to a comparison result between the sampled images and the standard images. If the quality of the drained waste liquid is below the standard level, the draining device will stop draining the waste liquid; otherwise, the waste liquid will be continuously drained after the waste liquid in the container A becomes empty.

After that, a step 64 is performed to determine the price of the qualified waste oil by the price determining module 30 according to the volume or weight of the waste liquid. Next, a transaction step 65 is performed wherein the price determined in the step 64 is returned to the user through a specific transaction method. In one embodiment, the price could be converted into the electrical currency or money and transmitted to the user through a third party payment policy, or transferring. For example, the previously described transaction methods could be performed by the element 33 electrically coupled to the transaction module 32. The element 33 could be a smart device, chip card or bank card.

Alternatively, the transaction method in step 65 could also be performed by exchanging process. For example, after determining the price of the waste liquid to be recycled, a step 650 is performed to inquire the user what kind of transaction method that the user would like to select. If the user selects the money transaction, a step 651a is performed to pay the user by third party payment for storing electronic currency into a chip card, or into a virtual account, or transferring to bank account of the user. If the user selects the commodity exchanging process, a step 651b is performed to display exchangeable commodity list and determined price on the display. In the step 651b, the device is electrically coupled to the cloud transaction server, e.g. shown in Fig. 5, and the commodities that could be exchanged are listed on the display. Next step 652 is performed that the user could select the required commodity type and amount from the display. After that, a step 653 is performed to convert the selected commodity and amount into price and then the price is compared to the value of the waste liquid to be recycled. . If the price is equal to the value, the step 654 is performed to ask the home delivery information and finish the exchanging process. However, in one case, if the price is insufficient, the device will further ask the user if additional deduction is available to be performed or not. If the user chooses No, the transaction will be canceled and step will back to 650. If the user chooses Yes, then many kinds of paying ways, such as third party payment, transferring money, or electronic currency will be shown on the display so that the user could choose the way for paying the money. If there has remaining price after the exchanging process, the display will show the multiple ways, such as third party payment, transferring money, or electronic currency, so that the user could select the way to get the remaining price.

While the present invention has been particularly shown and described with reference to a preferred embodiment, it will be understood by those skilled in the art that various changes in form and detail may be without departing from the scope of the present invention

## Claims

1. A method for optical inspection of a waste liquid (90) including a water content affecting a quality of the waste liquid and for determining a value of the waste liquid (90), comprising the steps of:
draining the waste liquid (90) and passing it through a transparent part (202) of a draining device (20) ;
illuminating the transparent part (202) while the waste liquid (90) passes through the transparent part (202) and acquiring light from the transparent part (202), for generating at least one image signal;
determining a quality of the waste liquid (90) according to the at least one generated image signal by converting the at least one generated image signal into quantitative values associated with the water content of the waste liquid and instantaneously determining the quality of the waste liquid (90) according to the quantitative values, wherein the quantitative values correspond to spectrum information and/or color information and/or transparency information associated with the at least one generated image signal and vary according to the quality of the waste liquid (90);
measuring the amount of waste liquid (90); and
determining the value of the waste liquid (64) according to the measured amount of the waste liquid (90) and the determined quality of the waste liquid (90);
**characterized in that** the draining device (20) includes a draining nozzle (200) and a draining pipeline (201), wherein the draining nozzle (200) is inserted into a container (A) so that the waste liquid (90) inside the container (A) is drained, and the pipeline (201) is coupled to the transparent part (202) for guiding the waste liquid (90) from the draining nozzle (200) to the transparent part (202).

2. The method of claim 1, further comprising a step of performing a transaction process with a user, said transaction process comprising a third-party payment, storing a price into a chip card (33), transferring money to a bank account, and accumulating credit points or directly exchanging commodity according to the price.

3. The method of claim 1 or 2, wherein a plurality of sample images associated with different qualities of the waste liquid is stored in an image database, and the at least one generated image signal is compared with the plurality of sample images in said step of determining the quality of the waste liquid (90).

4. A device for optical inspection of a waste liquid (90) including a water content affecting a quality of the waste liquid and for determining a value of the waste liquid (90), comprising: a transparent part (202);
a draining device (20) for draining the waste liquid (90) and passing it through the transparent part (202);
an illumination device (21) for illuminating the transparent part (202);
an image acquiring device (22) configured to acquire light from the waste liquid (90) passing through the transparent part (202) and generate at least one image signal with respect to the transparent part (202); and
a signal processing module (23) electrically coupled to the image acquiring device (22), for receiving the at least one generated image signal and determining a quality of the waste liquid according to the at least one generated image signal by converting the at least one generated image signal into quantitative values associated with the water content of the waste liquid (90) and instantaneously determining the quality of the waste liquid (90) according to the quantitative values, wherein the quantitative values correspond to spectrum information and/or color information and/or transparency information associated with the at least one generated image signal and vary according to the quality of the waste liquid (90); and
a value determining module (30) configured to measure the amount of the waste liquid (90) and to determine the value of the waste liquid (90) according to the measured amount of the waste liquid (90) and the determined quality of the waste liquid (90);
**characterized in that** the draining device (20) includes a draining nozzle (200) and a draining pipeline (201), wherein the draining nozzle (200) is inserted into a container (A) so that the waste liquid (90) inside the container (A) is drained, and the pipeline (201) is coupled to the transparent part (202) for guiding the waste liquid (90) from the draining nozzle (200) to the transparent part (202).

5. The device of claim 4, further comprising an image database for storing a plurality of sample images associated with different qualities of the waste liquid, wherein the signal processing module (23) is further configured to compare the at least one generated image signal with the plurality of sample images stored in the image database for determining the quality of the waste liquid (90).

6. The device of claim 4 or 5, wherein the signal processing module (23) is further configured to perform an artificial intelligent learning and calculation according to the spectrum information and/or the color information and/or the transparency information to adjust a standard for determining the quality of the waste liquid (90).

7. The device of any of claims 4 to 6, wherein the value determining module (30) is configured to measure a flow rate or weight of the waste liquid (90) qualified by the signal processing module (23) so as to calculate a price of the waste liquid.

8. The device of any of claims 4 to 7, further comprising a price storage unit for storing the price into a chip card of the storage unit, storing the price into an account through a portable smart device by third-party payment, or storing the price into a bank account corresponding to a bank card coupled to the price storage unit.

9. The device of any of claims 4 to 8, further comprising a transaction module electrically coupled to a cloud transaction platform, wherein the transaction module provides at least one commodity so that the price can be exchanged to the at least one commodity.

## Patentansprüche

1. Verfahren zur optischen Inspektion einer Abfall- bzw. Reststoffflüssigkeit (90), die einen Wassergehalt hat, der eine Qualität der Abfall- bzw. Reststoffflüssigkeit beeinflusst, und zur Bestimmung eines Wertes der Abfall- bzw. Reststoffflüssigkeit (90), mit den folgenden Schritten:
Ablassen der Abfall- bzw. Reststoffflüssigkeit (90) und Durchleiten derselben durch einen transparenten Abschnitt (202) einer Ablassvorrichtung (20);
Beleuchten des transparenten Abschnitts (202), während die Abfall- bzw. Reststoffflüssigkeit (90) den transparenten Abschnitt (202) durchströmt, und Erfassen von Licht von dem transparenten Abschnitt (202), um mindestens ein Bildsignal zu erzeugen;
Bestimmen einer Qualität der Abfall- bzw. Reststoffflüssigkeit (90) gemäß dem mindestens einen erzeugten Bildsignal durch Umwandeln des mindestens einen erzeugten Bildsignals in quantitative Werte, die dem Wassergehalt der Abfall- bzw. Reststoffflüssigkeit entsprechen, und sofortiges Bestimmen der Qualität der Abfall- bzw. Reststoffflüssigkeit (90) gemäß den quantitativen Werten, wobei die quantitativen Werte Lichtspektrum-Information und/oder Farb-Information und/oder Transparenz-Information entsprechen, die dem mindestens einen erzeugten Bildsignal entsprechen, und gemäß der Qualität der Abfall- bzw. Reststoffflüssigkeit (90) variieren;
Messen der Menge der Abfall- bzw. Reststoffflüssigkeit (90); und
Bestimmen des Wertes der Abfall- bzw. Reststoffflüssigkeit (64) gemäß der gemessenen Menge der Abfall- bzw. Reststoffflüssigkeit (90) und der bestimmten Qualität der Abfall- bzw. Reststoffflüssigkeit (90);
**dadurch gekennzeichnet, dass** die Ablassvorrichtung (20) eine Ablass-Düse (200) und eine Ablass-Rohrleitung (201) umfasst, wobei die Ablass-Düse (200) in einen Behälter (A) eingeführt wird, so dass die Abfall- bzw. Reststoffflüssigkeit (90) innerhalb des Behälters (A) abgelassen wird, und wobei die Rohrleitung (201) mit dem transparenten Abschnitt (202) gekoppelt ist, um die Abfall- bzw. Reststoffflüssigkeit (90) von der Ablass-Düse (200) zu dem transparenten Abschnitt (202) zu leiten.

2. Verfahren nach Anspruch 1, das ferner einen Schritt des Durchführens eines Transaktionsvorgangs mit einem Benutzer umfasst, wobei der Transaktionsvorgang eine Drittzahlung, das Speichern eines Preises auf einer Chipkarte (33), die Überweisung von Geld auf ein Bankkonto und das Sammeln von Kreditpunkten oder den direkten Austausch von Waren entsprechend dem Preis umfasst.

3. Verfahren nach Anspruch 1 oder 2, wobei eine Vielzahl von Musterbildern, die verschiedenen Qualitäten der Abfall- bzw. Reststoffflüssigkeit zugeordnet sind, in einer Bilddatenbank gespeichert wird, und das mindestens eine erzeugte Bildsignal mit der Vielzahl von Musterbildern in dem Schritt der Bestimmung der Qualität der Abfall- bzw. Reststoffflüssigkeit (90) verglichen wird.

4. Vorrichtung zur optischen Inspektion einer Abfall- bzw. Reststoffflüssigkeit (90), die einen Wassergehalt hat, der eine Qualität der Abfall- bzw. Reststoffflüssigkeit beeinflusst, und zur Bestimmung eines Wertes der Abfall- bzw. Reststoffflüssigkeit (90), umfassend:
einen transparenten Abschnitt (202):
eine Ablassvorrichtung (20), um die Abfall- bzw. Reststoffflüssigkeit (90) abzulassen und sie durch den transparenten Abschnitt (202) zu leiten;
eine Beleuchtungsvorrichtung (21) zum Beleuchten des transparenten Abschnitts (202);
eine Bilderfassungsvorrichtung (22), die so ausgelegt ist, dass sie Licht von der durch den transparenten Abschnitt (202) hindurch strömenden Abfall- bzw. Reststoffflüssigkeit (90) erfasst und mindestens ein Bildsignal für den transparenten Abschnitt (202) erzeugt; und
ein Signalverarbeitungsmodul (23), das elektrisch mit der Bilderfassungsvorrichtung (22) gekoppelt ist, um das mindestens eine erzeugte Bildsignal zu empfangen und eine Qualität der Abfall- bzw. Reststoffflüssigkeit gemäß dem mindestens einen erzeugten Bildsignal zu bestimmen, indem das mindestens eine erzeugte Bildsignal in quantitative Werte umgewandelt wird, die dem Wassergehalt der Abfall- bzw. Reststoffflüssigkeit (90) entsprechen, und um die Qualität der Abfall- bzw. Reststoffflüssigkeit (90) gemäß den quantitativen Werten sofort zu bestimmen, wobei die quantitativen Werte Lichtspektrum-Information und/oder Farb-Information und/oder Transparenz-Information entsprechen, die dem mindestens einen erzeugten Bildsignal entsprechen, und gemäß der Qualität der Abfall- bzw. Reststoffflüssigkeit (90) variieren; und
ein Wertbestimmungs-Modul (30), das ausgelegt ist, um die Menge der Abfall- bzw. Reststoffflüssigkeit (90) zu messen und den Wert der Abfall- bzw. Reststoffflüssigkeit (90) gemäß der gemessenen Menge der Abfall- bzw. Reststoffflüssigkeit (90) und der bestimmten Qualität der Abfall- bzw. Reststoffflüssigkeit (90) zu bestimmen;
**dadurch gekennzeichnet, dass** die Ablassvorrichtung (20) eine Ablass-Düse (200) und eine Ablass-Rohrleitung (201) umfasst, wobei die Ablass-Düse (200) in einen Behälter (A) eingeführt ist, so dass die Abfall- bzw. Reststoffflüssigkeit (90) innerhalb des Behälters (A) abgelassen wird, und wobei die Rohrleitung (201) mit dem transparenten Abschnitt (202) gekoppelt ist, um die Abfall- bzw. Reststoffflüssigkeit (90) von der Ablass-Düse (200) zu dem transparenten Abschnitt (202) zu leiten.

5. Vorrichtung nach Anspruch 4, die ferner eine Bilddatenbank zum Speichern einer Vielzahl von Musterbildern umfasst, die verschiedenen Qualitäten der Abfall- bzw. Reststoffflüssigkeit zugeordnet sind, wobei das Signalverarbeitungsmodul (23) ferner so ausgelegt ist, dass es das mindestens eine erzeugte Bildsignal mit der Vielzahl der in der Bilddatenbank gespeicherten Musterbilder vergleicht, um die Qualität der Abfall- bzw. Reststoffflüssigkeit (90) zu bestimmen.

6. Vorrichtung nach Anspruch 4 oder 5, wobei das Signalverarbeitungsmodul (23) ferner so ausgelegt ist, dass es ein künstliches intelligentes Lernen und eine Berechnung gemäß der Lichtspektrum-Information und/oder der Farb-Information und/oder der Transparenz-Information durchführt, um einen Standard zur Bestimmung der Qualität der Abfall- bzw. Reststoffflüssigkeit (90) einzustellen.

7. Vorrichtung nach einem der Ansprüche 4 bis 6, wobei das Wertbestimmungs-Modul (30) so ausgelegt ist, dass es eine Durchflussrate oder ein Gewicht der Abfall- bzw. Reststoffflüssigkeit (90) misst, die bzw. das von dem Signalverarbeitungsmodul (23) qualifiziert wurde, um einen Preis der Abfall- bzw. Reststoffflüssigkeit zu berechnen.

8. Vorrichtung nach einem der Ansprüche 4 bis 7, ferner umfassend eine Preis-Speichereinheit zum Speichern des Preises auf einer Chipkarte der Speichereinheit, zum Speichern des Preises auf einem Konto über ein tragbares intelligentes Gerät durch Zahlung von Dritten oder zum Speichern des Preises auf einem Bankkonto, das einer mit der Preis-Speichereinheit gekoppelten Bankkarte entspricht.

9. Vorrichtung nach einem der Ansprüche 4 bis 8, die ferner ein Transaktionsmodul umfasst, das elektrisch mit einer Cloud-Transaktionsplattform verbunden ist, wobei das Transaktionsmodul mindestens eine Ware bereitstellt, so dass der Preis gegen die mindestens eine Ware getauscht werden kann.

## Revendications

1. Un procédé d'inspection optique d'un déchet liquide (90) comprenant une teneur en eau affectant une qualité du déchet liquide et de détermination d'une valeur du déchet liquide (90), comprenant les étapes consistant à :
vidanger le déchet liquide (90) et le faire passer à travers une partie transparente (202) d'un dispositif de vidange (20) ;
illuminer la partie transparente (202) pendant que le déchet liquide (90) passe à travers la partie transparente (202) et acquérir la lumière de la partie transparente (202), pour générer au moins un signal d'image ;
déterminer une qualité du déchet liquide (90) selon l'au moins un signal d'image généré en convertissant l'au moins un signal d'image généré en valeurs quantitatives associées à la teneur en eau du déchet liquide et en déterminant instantanément la qualité du déchet liquide (90) selon les valeurs quantitatives, dans lequel les valeurs quantitatives correspondent à des informations de spectre et/ou des informations de couleur et/ou des informations de transparence associées à l'au moins un signal d'image généré et varient selon la qualité du déchet liquide (90) ;
mesurer la quantité de déchet liquide (90) ; et
déterminer la valeur du déchet liquide (64) en fonction de la quantité mesurée du déchet liquide (90) et de la qualité déterminée du déchet liquide (90) ;
**caractérisé en ce que** le dispositif de vidange (20) comprend une buse de vidange (200) et une conduite de vidange (201), dans lequel la buse de vidange (200) est insérée dans un récipient (A) de sorte que le déchet liquide (90) à l'intérieur du récipient (A) est drainé, et la conduite (201) est couplée à la partie transparente (202) pour guider le déchet liquide (90) de la buse de vidange (200) à la partie transparente (202).

2. Le procédé selon la revendication 1, comprenant en outre une étape consistant à effectuer un processus de transaction avec un utilisateur, ledit processus de transaction comprenant un paiement par un tiers, le stockage d'un prix dans une carte à puce (33), le transfert d'argent vers un compte bancaire, et l'accumulation de points de crédit ou l'échange direct de marchandises en fonction du prix.

3. Le procédé selon la revendication 1 ou 2, dans lequel une pluralité d'images échantillons associées à différentes qualités du déchet liquide est stockée dans une base de données d'images, et le au moins un signal d'image généré est comparé à la pluralité d'images échantillons dans ladite étape de détermination de la qualité du déchet liquide (90).

4. Un dispositif d'inspection optique d'un déchet liquide (90) comprenant une teneur en eau affectant une qualité du déchet liquide et de détermination d'une valeur du déchet liquide (90), comprenant :
une partie transparente (202) :
un dispositif de vidange (20) pour vidanger le déchet liquide (90) et le faire passer à travers la partie transparente (202) ;
un dispositif d'éclairage (21) pour éclairer la partie transparente (202) ;
un dispositif d'acquisition d'images (22) configuré pour acquérir la lumière provenant du déchet liquide (90) passant à travers la partie transparente (202) et générer au moins un signal d'image par rapport à la partie transparente (202) ; et
un module de traitement de signal (23) couplé électriquement au dispositif d'acquisition d'images (22), pour recevoir le au moins un signal d'image généré et déterminer une qualité du déchet liquide selon le au moins un signal d'image généré en convertissant le au moins un signal d'image généré en valeurs quantitatives associées à la teneur en eau du déchet liquide (90) et en déterminant instantanément la qualité du déchet liquide (90) selon les valeurs quantitatives, dans lequel les valeurs quantitatives correspondent à des informations de spectre et/ou des informations de couleur et/ou des informations de transparence associées à l'au moins un signal d'image généré et varient selon la qualité du déchet liquide (90) ; et
un module de détermination de valeur (30) configuré pour mesurer la quantité du déchet liquide (90) et pour déterminer la valeur du déchet liquide (90) selon la quantité mesurée du déchet liquide (90) et la qualité déterminée du déchet liquide (90) ;
**caractérisé en ce que** le dispositif de vidange (20) comprend une buse de vidange (200) et une conduite de vidange (201), dans lequel la buse de vidange (200) est insérée dans un récipient (A) de sorte que le déchet liquide (90) à l'intérieur du récipient (A) est vidangé, et la conduite (201) est couplée à la partie transparente (202) pour guider le déchet liquide (90) de la buse de vidange (200) à la partie transparente (202).

5. Le dispositif selon la revendication 4, comprenant en outre une base de données d'images pour stocker une pluralité d'images d'échantillons associées à différentes qualités du déchet liquide, dans lequel le module de traitement de signal (23) est en outre configuré pour comparer le au moins un signal d'image généré avec la pluralité d'images d'échantillons stockées dans la base de données d'images pour déterminer la qualité du déchet liquide (90).

6. Le dispositif selon la revendication 4 ou 5, dans lequel le module de traitement de signal (23) est en outre configuré pour effectuer un apprentissage et un calcul intelligent artificiel selon les informations de spectre et/ou les informations de couleur et/ou les informations de transparence pour ajuster une norme pour déterminer la qualité du déchet liquide (90).

7. Le dispositif selon l'une quelconque des revendications 4 à 6, dans lequel le module de détermination de valeur (30) est configuré pour mesurer un débit ou un poids du déchet liquide (90) qualifié par le module de traitement de signal (23) de manière à calculer un prix du déchet liquide.

8. Le dispositif selon l'une quelconque des revendications 4 à 7, comprenant en outre une unité de stockage de prix pour stocker le prix dans une carte à puce de l'unité de stockage, stocker le prix dans un compte par le biais d'un dispositif intelligent portable par paiement tiers, ou stocker le prix dans un compte bancaire correspondant à une carte bancaire couplée à l'unité de stockage de prix.

9. Le dispositif selon l'une quelconque des revendications 4 à 8, comprenant en outre un module de transaction couplé électriquement à une plateforme de transaction en nuage, dans lequel le module de transaction fournit au moins une marchandise de sorte que le prix peut être échangé contre la au moins une marchandise.
